# EUROPÄISCHE PATENTSCHRIFT

(11) **EP 3 813 249 B1**
(45) Veröffentlichungstag und Bekanntmachung des Hinweises auf die Patenterteilung: **09.08.2023**
(21) Anmeldenummer: 20202980.7
(22) Anmeldetag: 21.10.2020
(51) Int. Cl.: H02P 9/10, H02P 9/48, H02P 9/04, H02J 3/30, H02J 7/32, H02J 3/32

(54) **GENERATORSATZ ZUM ERZEUGEN EINES WECHSELSTROMES**
GENERATOR SET FOR GENERATING AN ALTERNATING CURRENT
ENSEMBLE GÉNÉRATEUR PERMETTANT DE GÉNÉRER UN COURANT ALTERNATIF

(30) Priorität: 21.10.2019 DE 102019128387
(43) Veröffentlichungstag der Anmeldung: 28.04.2021
(73) Patentinhaber: Torqeedo GmbH, 82205 Gilching (DE)
(72) Erfinder: Biebach, Jens, 82327 Tutzing (DE)
(74) Vertreter: Nordmeyer, Philipp Werner

(56) Entgegenhaltungen:
- EP-A2- 2 251 953
- EP-A2- 3 351 472
- DE-A1-102005 000 998

## Beschreibung

### Technisches Gebiet

Die vorliegende Erfindung betrifft einen Generatorsatz zum Erzeugen eines Wechselstromes.

### Stand der Technik

Herkömmliche Generatorsätze sind im Allgemeinen aus einem Verbrennungsmotor und einen Generator ausgebildet, wobei der Verbrennungsmotor über ein Getriebe oder direkt mit dem elektrischen Generator, meistens eine fremderregte Synchronmaschine, gekoppelt ist.

Hierbei sind die Anforderungen an die Wechselstrom-Netzfrequenz durch Standards festgelegt, die z.B. auch die zulässige Frequenzabweichung definieren. In einem Wechselstrom-Netz mit mehreren Quellen wird die Leistungsaufteilung durch die Frequenz geregelt. Je höher die Frequenz ist, umso höher ist der anteilige Leistungsbeitrag.

Ziel ist es häufig, den relativen Leistungsbeitrag eines Generators in verschiedenen Arbeitspunkten so weit wie möglich konstant zu halten. Damit die Frequenz das zulässige Toleranzband selbst bei Beaufschlagung mit einem Leistungssprung nicht verlässt, muss der Verbrennungsmotor über Stellreserven und eine schnelle Regelung verfügen. Auch die Massenträgheit des Generatorsatzes hilft, die Frequenz bei einem Lastsprung konstant zu halten.

Verbrennungsmotoren fehlt häufig die notwendige Regeldynamik, so dass selbst bei vorhandener Stellreserve zu größeren Motoren gegriffen wird, um die erforderliche Massenträgheit bereitstellen zu können. Dies führt zur Verwendung von Verbrennungsmotoren, die mit ihrer Nennleistung deutlich über der Nennleistung des Generators liegen. Damit wird vielfach die Abgastemperatur nicht erreicht, die für eine einwandfreie Abgasnachbehandlung notwendig ist. Infolgedessen steigen die Wartungskosten. Ferner ist eine komplexere und/oder zusätzliche Abgasreinigung vorzusehen. Dies führt zu hohen Kosten von Verbrennungsmotor und Abgasanlage.

Die EP 2 251 953 A2 zeigt ein Stromerzeugungssystem mit einem Generatorsatz, umfassend einen Verbrennungsmotor und einen mit diesem gekoppelten Generator mit variabler Geschwindigkeit, der konfiguriert ist, elektrische Leistung zu erzeugen. Ferner ist ein Hilfs-Motor/Generatorsatz mit dem Generator verbunden.

Die EP 3 351 472 A2 zeigt eine Vorrichtung zum Bereitstellen elektrischer Energie für einen elektrischen Verbraucher und/oder zum Laden einer Batterie in einem Boot.

Die DE 10 2005 000998 A1 zeigt ein Wechselstrom-Inselnetz mit einem das Inselnetz speisenden, von einem Verbrennungsmotor angetriebenen Generator und einer Solarstromquelle, die ihre Energie gleichzeitig In das Inselnetz einspeist, wobei deren Solarstrom einen Gleichstrommotor in Bewegung setzt, der über eine mechanische Kupplung zusammen mit dem Verbrennungsmotor den Wechselstromgenerator antreibt.

### Darstellung der Erfindung

Ausgehend von dem bekannten Stand der Technik ist es eine Aufgabe der vorliegenden Erfindung, einen verbesserten Generatorsatz zum Erzeugen eines Wechselstromes bereitzustellen.

Die Aufgabe wird durch einen Generatorsatz zum Erzeugen eines Wechselstromes mit den Merkmalen des Anspruchs 1 gelöst. Vorteilhafte Weiterbildungen ergeben sich aus den Unteransprüchen, der Beschreibung und den Figuren.

Entsprechend wird ein Generatorsatz zum Erzeugen eines Wechselstromes vorgeschlagen, umfassend eine Primärleistungseinheit und einen mit der Primärleistungseinheit drehgekoppelten Wechselstrom-Generator, welcher eingerichtet ist, um eine durch die Primärleistungseinheit bereitgestellte Primärleistung in eine elektrische Leistung umzuwandeln. Der Generatorsatz kennzeichnet sich ferner durch eine zuschaltbare Sekundärleistungseinheit, welche derart ausgebildet ist, dass die erzeugte Leistung des Wechselstrom-Generators durch Zuschalten der Sekundärleistungseinheit erhöht wird.

Dadurch, dass eine zuschaltbare Sekundärleistungseinheit, welche derart ausgebildet ist, dass die erzeugte Leistung des Wechselstrom-Generators durch Zuschalten der Sekundärleistungseinheit erhöht wird, vorgesehen ist, kann temporär ein zusätzlicher Leistungsbedarf, der über die via der Nennleistung des Verbrennungsmotors lieferbaren Leistung hinausgeht, gedeckt werden, ohne beim Verbrennungsmotor Leistungsreserven vorsehen zu müssen, welche etwa zu einem Verbrennungsmotor führen würden, welcher mit seiner Nennleistung deutlich über der Nennleistung des Generators läge. Durch die zuschaltbare Sekundärleistungseinheit kann vielmehr eine nahezu optimale Auslegung von Verbrennungsmotor und Wechselstrom-Generator zueinander für den Dauerbetrieb, insbesondere beim Betrieb des Wechselstrom-Generators bei seiner Nennleistung, ermöglicht werden.

Folglich kann im vorgesehenen Dauerbetrieb der Primärleistungseinheit diese nahe oder gar bei ihrer Nennleistung betrieben werden. Infolgedessen kann eine Abgastemperatur erreicht werden, welche für eine für diese Primärleistungseinheit vorgesehene bestmögliche Abgasnachbehandlung erforderlich ist. Dadurch lassen sich die Wartungskosten der Primärleistungseinheit gering halten. Zudem kann die Abgasnachbehandlung einfach aufgebaut sein und/oder auf eine ansonsten vorzusehende weitere und oder komplexe Abgasnachbehandlungseinheit verzichtet werden.

Vorzugsweise ist die Sekundärleistungseinheit ausgebildet, um zumindest temporär zuschaltbar zu sein.

Gemäß einer bevorzugten Ausführungsform entspricht die Leistung des Wechselstrom-Generators einer via eines dem Wechselstrom-Generator von der Primärleistungseinheit zugeführten Primärnennleistungseintrags erzeugten Leistung. Dadurch ist es möglich, die Primärleistungseinheit nahe ihres optimalen Betriebspunktes zu betreiben.

Durch Versuche hat sich herausgestellt, dass es im Besonderen vorteilhaft ist, wenn die Primärleistungseinheit ein Verbrennungsmotor ist.

Vorteilhafterweise ist der Wechselstrom-Generator eine fremderregte Synchronmaschine.

Erfindungsgemäß weist die Sekundärleistungseinheit einen Elektromotor, bevorzugt eine Asynchronmaschine oder einen Reluktanzmotor bzw. "switched reluctance motor" (SRM), und einen mit dem Elektromotor kontaktierten Sekundärenergiespeicher, bevorzugt eine Batterie, insbesondere eine Lithium-Ionen-Batterie, oder ein Kondensator, insbesondere ein Elektrolyt-Kondensator, oder ein Superkondensator, auf, wobei der Elektromotor erfindungsgemäß mit einer Eingangswelle des Wechselstrom-Generators drehgekoppelt ist. Durch den Elektromotor ist es möglich, zusätzlich zur via der Primärleistungseinheit bereitgestellten Leistung eine zusätzliche mechanische Leistung, insbesondere ein zusätzliches Drehmoment, am Wechselstrom-Generator bereitzustellen. Es hat sich herausgestellt, dass ein Elektromotor, insbesondere wenn dieser als Asynchronmaschine oder als Reluktanzmotor ausgebildet ist, über eine besonders gute Überlastfähigkeit sowie eine sehr gute Regeldynamik verfügt. Ferner weist ein Elektromotor, insbesondere ausgebildet als Asynchronmaschine oder Reluktanzmotor, geringe Verluste während eines Stand-by-Betriebes auf, welche in der Regel vernachlässigbar sind. Alternativ kann der Elektromotor auch in Form einer permanenterregten Synchronmaschine ausgebildet sein, wenn die permanent auftretenden Eisenverluste in Kauf genommen werden können.

Die elektrische Kontaktierung des Elektromotors mit dem Sekundärenergiespeicher umfasst gegebenenfalls einen Stromrichter, vorzugsweise einen Frequenzumrichter, wobei der Stromrichter als Anpassungselement zwischen dem Sekundärenergiespeicher und dem Elektromotor fungiert, derart, dass die durch den Sekundärenergiespeicher bereitgestellte Energie in eine für den Betrieb des Elektromotors in seiner jeweiligen Ausführung passende Form umgerichtet beziehungsweise umgewandelt wird.

Gemäß einer weiteren bevorzugten Ausführungsform ist eine Ausgangswelle der Primärleistungseinheit mit einer Eingangswelle des Wechselstrom-Generators direkt drehverbunden. Alternativ kann die Ausgangswelle der Primärleistungseinheit mit der Eingangswelle des Wechselstrom-Generators über ein Getriebe drehverbunden sein.

Gemäß einer weiteren bevorzugten Ausführungsform ist eine Ausgangswelle der Sekundärleistungseinheit mit einer Eingangswelle des Wechselstrom-Generators direkt drehverbunden. Alternativ kann die Ausgangswelle der Sekundärleistungseinheit mit der Eingangswelle des Wechselstrom-Generators über ein Getriebe drehverbunden sein.

Vorzugsweise kann die Sekundärleistungseinheit von dem Wechselstrom-Generator entkoppelt werden und/oder kann die Sekundärleistungseinheit momentfrei schaltbar ausgebildet sein.

Die Sekundärleistungseinheit kann bevorzugt derart ausgebildet sein, dass ein Elektromotor der Sekundärleistungseinheit derart ausgebildet ist, dass er als Generator betreibbar ist. Dadurch kann ein Energiespeicher der Sekundärleistungseinheit durch den Generatorbetrieb des Elektromotors der Sekundärleistungseinheit geladen werden. Das für den Generatorbetrieb erforderliche Drehmoment kann hierfür ebenfalls durch die Primärleistungseinheit bereitgestellt und über den Wechselstrom-Generator bzw. über eine durchgehende Eingangswelle des Wechselstrom-Generators übertragen werden.

Ferner kann der Stromrichter der elektrischen Kontaktierung so ausgebildet sein, dass die im Generatorbetrieb durch den Elektromotor ausgebildete Energie in eine Form umgewandelt werden kann, welche passend ist zum Landen des Sekundärenergiespeichers der Sekundärleistungseinheit. Mit anderen Worten kann der Stromrichter beziehungsweise Umrichter bidirektional arbeitend ausgebildet sein. Alternativ kann hierzu auch ein weiterer Umwandler in der elektrischen Kontaktierung vorgesehen sein, und/oder ein weiterer Umwandler, bevorzugt ein Gleichrichter, ist separat zur elektrischen Kontaktierung vorgesehen.

Der Elektromotor der Sekundärleistungseinheit kann momentfrei schaltbar ausgebildet sein. Solange die Primärleistungseinheit in der Lage ist, den vom Generatorsatz, beispielsweise durch einen Verbraucher, abgerufenen Leistungsbedarf selbst zu decken, kann der Elektromotor der Sekundärleistungseinheit momentfrei geschaltet sein.

Insbesondere unter Berücksichtigung einer angestrebten Drehmomentaddition eines durch die Primärleistungseinheit bereitgestellten Drehmoments und eines durch die Sekundärleistungseinheit bereitgestellten Drehmoments hat es sich als vorteilhaft herausgestellt, bezogen auf den Wechselstrom-Generator die Primärleistungseinheit auf einer ersten Seite des Wechselstrom-Generators anzuordnen und die Sekundärleistungseinheit auf einer der ersten Seite überliegenden zweiten Seite des Wechselstrom-Generators anzuordnen.

Alternativ können die Primärleistungseinheit und die Sekundärleistungseinheit auch gemeinsam auf einer Seite des Wechselstrom-Generators angeordnet sein, wenn die Ausgangswellen der Primärleistungseinheit und der Sekundärleistungseinheit eine Drehmomentaddition zulassen.

Erfindungsgemäß weist die Primärleistungseinheit einen Drehzahlregler auf und weist die Sekundärleistungseinheit einen Drehzahlregler auf.

Um ein einfaches dezentrales Steuern/Regeln der Sekundärmaschine zu erzielen, kann die Aktivität der Sekundärleistungseinheit ferner durch ein eigenes Toleranzband festgelegt sein.

Entsprechend kann die Aktivität der Primärleistungseinheit ferner durch ein eigenes Toleranzband festgelegt sein.

Erfindungsgemäß wird dem Drehzahlregler der Sekundärleistungseinheit eine Solldrehzahl, zugeführt, der unterhalb, bevorzugt geringfügig unterhalb, der Solldrehzahl der Primärleistungseinheit liegt. Bevorzugt liegt der Sollwert der Sekundärleistungseinheit dabei innerhalb des für die Sekundärleistungseinheit vorgegebenen Toleranzbandes.

Vorzugsweise ist die Regelstruktur der Primärleistungseinheit und/oder der Sekundärleistungseinheit zweistufig aufgebaut, wobei bevorzugt einem äußeren Drehzahlregler ein innerer Drehmomentregler unterlagert ist. Hierbei kann der Drehzahlregler die Vorgabewerte für den Drehmomentregler liefern, wobei die Vorgabewerte bevorzugt auf positive Drehmomentwerte beschränkt sind. Dadurch kann erzielt werden, dass die Sekundärleistungseinheit im Normalfall nicht gegen den Drehzahlregler der Primärleistungseinheit arbeiten kann.

Es hat sich herausgestellt, dass bei optionaler Verwendung eines reinen P-Verstärkers eine zusätzliche Sicherheit erzielt werden kann. Durch das Vorsehen des P- Verstärkers kann erzielt werden, dass das eingestellte Drehmoment mit der Regelabweichung ansteigt, d.h., je näher die Drehzahl dem Sollwert der Sekundärleistungseinheit kommt, umso geringer fällt das Drehmoment aus.

Gemäß einer weiteren bevorzugten Ausführungsform umfasst die Primärleistungseinheit einen Drehzahlregler mit zuschaltbarem und abschaltbarem negativem Drehmoment und/oder umfasst die Sekundärleistungseinheit einen Drehzahlregler mit zuschaltbarem und abschaltbarem negativem Drehmoment. Bevorzugt ist vorgesehen, ein Zu- oder Abschalten des negativen Drehmoments gemäß dem Energiegehalt des Energiespeichers der Sekundärleistungseinheit zu steuern/regeln.

Insbesondere für den Fall, dass der Energiespeicher der Sekundärleistungseinheit über eine kleine Kapazität verfügt, so dass sich die Spannung bei der Nutzung der Sekundärmaschine bzw. Sekundärleistungseinheit signifikant verändert, kann diese Spannung als Kriterium für die Aktivierung bzw. Deaktivierung eines negativen Drehmoments verwendet werden. Vorzugsweise wird ein negatives Drehmoment dann freigegeben, wenn die Spannung des Energiespeichers einen hierfür festgelegten ersten Grenzwert unterschreitet. Ferner kann die Freigabe des negativen Drehmoments wieder zurückgenommen werden, wenn ein weiterer Grenzwert, welcher größer ist als der erste Grenzwert, überschritten wird. Dadurch kann eine Hysterese bereitgestellt werden, welche eine Stabilität hinsichtlich der Ladefunktion des Speichers ermöglicht.

Gemäß einer bevorzugten alternativen Ausgestaltung kann die Steuerung/Regelung des Zuschaltens oder Abschaltens des negativen Drehmoments auch auf einer anderen Größe basieren, bevorzugt einer Ladung des Energiespeichers. Dies kann insbesondere vorteilhaft sein, wenn die Kapazität des Energiespeichers derart groß ist, dass die Spannung während der Leistungsabgabe keine signifikante Änderung zeigt. Um die Ladung als steuernde/regelnde Größe zu nutzen, kann der Speicherstrom über die Zeit integriert werden. Analog zur Steuerung/Regelung mittels der Spannung des Energiespeichers kann auch bei Verwendung der Ladung des Energiespeichers als Steuergröße/Regelgröße bei Unterschreiten eines vorgegebenen Wertes, etwa eines Integralwertes des Speicherstromes, das negative Drehmoment freigegeben bzw. zugeschalten werden, und bei Überschreiten eines weiteren vorgegebenen Wertes, welcher höher ist als der zuvor genannte erste vorgegebene Wert, wieder abgeschaltet werden.

Vorzugsweise kann ein weiterer Regler für das Steuern/Regeln der Spannungsamplitude vorgesehen sein. Dies kann im Falle der Verwendung eines fremderregten Synchrongenerators optional durch eine Nachführung der Erregung erfolgen.

Gemäß einer weiteren bevorzugten Ausführungsform ist die Sekundärleistungseinheit, bevorzugt ein Elektromotor der Sekundärleistungseinheit, derart ausgebildet, dass dessen Drehmoment, bevorzugt dessen Nenndrehmoment, größer ist als ein Losbrechmoment der Primärleistungseinheit, bevorzugt größer als das Losbrechmoment zuzüglich der mechanischen Verluste, welche in dem vorgeschriebenen System vorliegen. Mit anderen Worten kann die Sekundärleistungseinheit ausgebildet sein, um ein Drehmoment bereitzustellen, welches größer ist als das Losbrechmoment und die mechanischen Verluste des Generatorsatzes. Dadurch kann es möglich sein, den Generatorsatz via der Sekundärleistungseinheit zu starten, oder ein Starten des Generatorsatzes mittels eines Starters zumindest zu unterstützen.

Gemäß einer weiteren bevorzugten Ausführungsform umfasst die Sekundärleistungseinheit einen Sekundärenergiespeicher, bevorzugt eine Batterie, insbesondere eine Lithium-Ionen-Batterie, oder ein Kondensator, insbesondere ein Elektrolyt-Kondensator oder ein Superkondensator, und einen Wechselrichter, bevorzugt einen fremdgeführten Wechselrichter. Bevorzugt sind eine Ausgangsleitung des Wechselstrom-Generators und eine Ausgangsleitung des Wechselrichters, bevorzugt zuschaltbar und abschaltbar ausgebildet, miteinander verbunden. Dadurch kann der erzeugten Leistung des Wechselstrom-Generators durch Zuschalten der Sekundärleistungseinheit direkt aus dem Energiespeicher via des Wechselrichters eine zusätzliche Leistung zugeführt werden. Dadurch kann die Primärleistungseinheit entlastet werden und weiter in seinem Auslegungspunkt betrieben werden.

Gemäß einer weiteren bevorzugten Ausführungsform ist der Wechselrichter der Sekundärleistungseinheit ein bidirektional arbeitender Inverter. Dadurch kann Energie zum (Nach-) Laden des Sekundärenergiespeichers im Normalbetrieb durch den Wechselstrom-Generator bereitgestellt werden und über den bidirektional arbeitenden Inverter dem Sekundärenergiespeicher zugeführt werden. Alternativ kann auch vorgesehen sein, einen zusätzlichen Gleichrichter vorzusehen, über welchen der Sekundärenergiespeicher mittels des durch den Wechselstrom-Generator erzeugten Wechselstromes geladen werden kann.

In einer weiteren bevorzugten Ausführungsform kann vorgesehen sein, dass der Sekundärenergiespeicher über Anbinden an ein Stromnetz geladen werden kann. Vorzugsweise weist der Sekundärenergiespeicher hierfür eine entsprechende Verbindungseinheit auf.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch einen Generatorsatz zum Erzeugen eines Wechselstromes gemäß einer ersten Ausführungsform;
- Figur 2: schematisch einen Generatorsatz zum Erzeugen eines Wechselstromes gemäß einer weiteren Ausführungsform; und
- Figur 3: schematisch einen Generatorsatz zum Erzeugen eines Wechselstromes gemäß einer weiteren Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

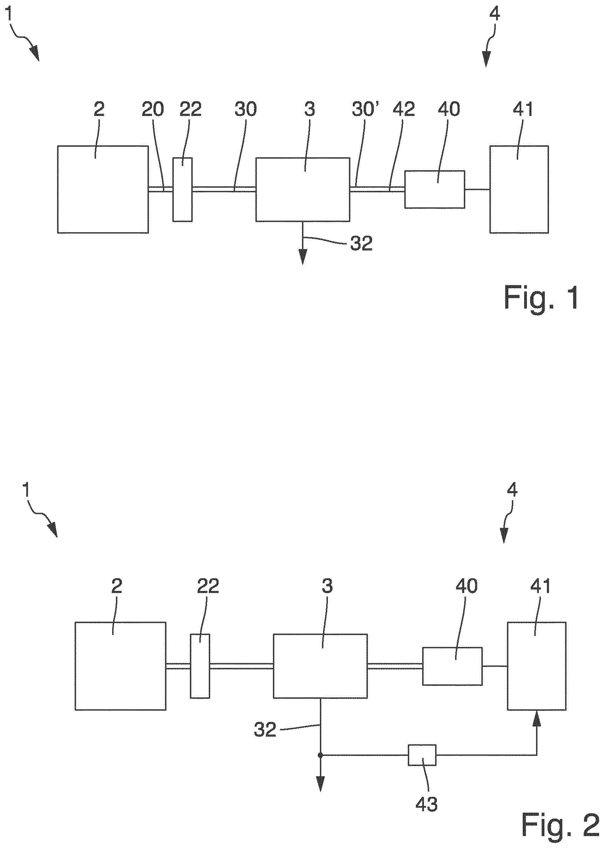

Figur 1 zeigt schematisch einen Generatorsatz 1 zum Erzeugen eines Wechselstromes gemäß einer ersten Ausführungsform. Der Generatorsatz 1 umfasst eine Primärleistungseinheit 2 in Form eines Verbrennungsmotors, vorliegend eines Dieselmotors, und einen mit der Primärleistungseinheit 2 drehgekoppelten Wechselstrom-Generator 3, vorliegend in Form einer fremderregten Synchronmaschine, welcher eingerichtet ist, um eine durch die Primärleistungseinheit 2 bereitgestellte Primärleistung in eine elektrische Leistung umzuwandeln. Der Generatorsatz 1 weist zudem eine zuschaltbare Sekundärleistungseinheit 4 auf, welche derart ausgebildet ist, dass die erzeugte Leistung des Wechselstrom-Generators 3 durch Zuschalten der Sekundärleistungseinheit 4 temporär erhöht werden kann.

Hierbei entspricht die Leistung des Wechselstrom-Generators einer via eines dem Wechselstrom-Generator von der Primärleistungseinheit zugeführten Primärnennleistungseintrags erzeugten Leistung.

Die Sekundärleistungseinheit 4 weist einen Elektromotor 40, vorliegend eine Asynchronmaschine, und einen mit dem Elektromotor 40 kontaktierten Sekundärenergiespeicher 41, beispielsweise in Form einer Batterie, insbesondere eine Lithium-Ionen-Batterie, oder in Form eines Kondensators, optional ein Elektrolyt-Kondensator oder ein Superkondensator, auf. Die elektrische Kontaktierung zwischen Elektromotor 40 und Sekundärenergiespeicher 41 umfasst einen bidirektional arbeitenden Umrichter (nicht gezeigt), welcher die durch den Sekundärenergiespeicher 41 bereitgestellte Energie in die für den Betrieb des Elektromotors 40 geeignete Form umwandelt und umgekehrt.

Der Elektromotor 40 ist mit einer Eingangswelle 30` des Wechselstrom-Generators 3 drehgekoppelt. Durch den Elektromotor 40 ist es möglich, zusätzlich zur via der Primärleistungseinheit 2 bereitgestellten Leistung eine zusätzliche mechanische Leistung, insbesondere ein zusätzliches Drehmoment, am Wechselstrom-Generator 3 bereitzustellen.

Alternativ kann der Elektromotor 40 auch als Reluktanzmotor bzw. "switched reluctance motor" (SRM) ausgebildet sein. Ferner kann die Ausgangswelle 42 der Sekundärleistungseinheit 4 mit der Eingangswelle 30' des Wechselstrom-Generators 3 über ein Getriebe (nicht gezeigt) drehverbunden sein.

Eine Ausgangswelle 20 der Primärleistungseinheit 2 ist mit einer Eingangswelle 30 des Wechselstrom-Generators 3 über ein Getriebe 22 drehverbunden. Alternativ kann die Ausgangswelle 20 auch direkt mit der Eingangswelle 30 drehgekoppelt sein.

Der Elektromotor 40 ist von dem Wechselstrom-Generator 3 entkoppelbar ausgebildet. Ferner kann der Elektromotor 40 auch als Generator betrieben werden, um den Sekundärenergiespeicher 41 aufladen zu können, wenn keine zusätzliche Leistung durch die Sekundärleistungseinheit 4 bereitgestellt werden muss.

Solange die Primärleistungseinheit 2 in der Lage ist, den vom Generatorsatz 1, beispielsweise durch einen Verbraucher, abgerufenen Leistungsbedarf selbst zu decken und der Sekundärenergiespeicher 41 nicht geladen werden muss, kann der Elektromotor 40 der Sekundärleistungseinheit 4 momentfrei geschaltet sein.

Vorliegend ist bezogen auf den Wechselstrom-Generator 3 die Primärleistungseinheit 2 auf einer ersten Seite des Wechselstrom-Generators 3 angeordnet und die Sekundärleistungseinheit 4 auf einer der ersten Seite überliegenden zweiten Seite des Wechselstrom-Generators 3 angeordnet.

Alternativ können die Primärleistungseinheit 2 und die Sekundärleistungseinheit 4 auch gemeinsam auf einer Seite des Wechselstrom-Generators 3 angeordnet sein.

Vorliegend weisen die Primärleistungseinheit 2 und die Sekundärleistungseinheit 4 jeweils einen Drehzahlregler auf. Der Primärleistungseinheit 2 und der Sekundärleistungseinheit 4 ist zudem jeweils ein eigenes Toleranzband zugeordnet.

Dem Drehzahlregler der Sekundärleistungseinheit 4 wird ein Sollwert in Form einer Solldrehzahl zugeführt, der etwas unterhalb eines Sollwertes in Form einer Solldrehzahl der Primärleistungseinheit 2 liegt, jedoch innerhalb des für die Sekundärleistungseinheit 4 vorgegebenen Toleranzbandes.

Die Primärleistungseinheit 2 und die Sekundärleistungseinheit 4 weisen jeweils eine zweistufig aufgebaute Regelstruktur auf, wobei jeweils einem äußeren Drehzahlregler ein innerer Drehmomentregler unterlagert ist. Dadurch liefert der Drehzahlregler die Vorgabewerte für den Drehmomentregler, wobei die Vorgabewerte gemäß dieser bevorzugten Ausführungsform optional auf positive Drehmomentwerte beschränkt sind.

Ferner sind für die Primärleistungseinheit 2 und die Sekundärleistungseinheit 4 unterschiedliche Drehzahlschwellenwerte vorgegeben. Dadurch ist für die Primärleistungseinheit 2 und die Sekundärleistungseinheit 4 ein Hystereseeffekt bereitgestellt, der das Auftreten von Drehzahlschwingungen an der Solldrehzahl, welche aus einem Zuschalten und oder Wegschalten des via der Sekundärleistungseinheit 4 bereitgestellten Drehmoments auftreten könnten, reduziert oder gar gänzlich eliminiert.

Um eine zusätzliche Sicherheit bereitzustellen, findet ein reiner P-Verstärker Einsatz.

Der Drehzahlregler der Sekundärleistungseinheit 4 ist mit zuschaltbarem und abschaltbarem negativem Drehmoment ausgebildet. Ein Zu- oder Abschalten des negativen Drehmoments wird vorliegend basierend auf dem Energiegehalt des Sekundärenergiespeichers 41 gesteuert/geregelt.

Der Elektromotor 40 der Sekundärleistungseinheit 4 ist derart ausgebildet, dass er ein Drehmoment bereitstellen kann, dass größer ist als ein kumuliertes Drehmoment gebildet aus dem Losbrechmoment der Primärleistungseinheit 2 und den mechanischen Verlusten des Generatorsatzes 1. Dadurch kann der Generatorsatz 1 via der Sekundärleistungseinheit 4 gestartet werden.

Figur 2 zeigt schematisch einen Generatorsatz 1 zum Erzeugen eines Wechselstromes gemäß einer weiteren Ausführungsform. Der Generatorsatz 1 aus Figur 2 entspricht im Wesentlichen dem Generatorsatz aus Figur 1, wobei ferner ein Gleichrichter 43 vorgesehen ist, über welchen der Sekundärenergiespeicher 41 mit der Ausgangsleitung 32 des Wechselstrom-Generators 3 abschaltbar verbindbar ist. Dadurch kann der Sekundärenergiespeicher 41 durch Umrichten der durch den Wechselstrom-Generator 3 bereitgestellten Wechselspannung in eine Gleichspannung via des Gleichrichters 43 geladen werden.

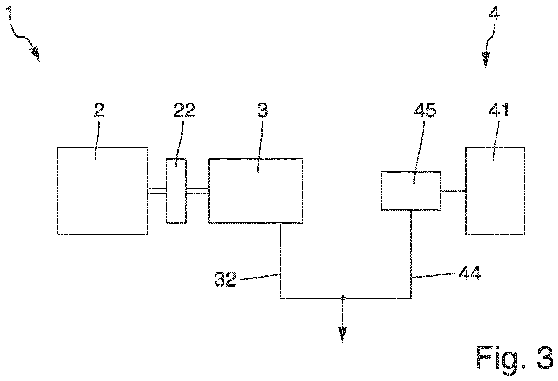

In Figur 3 ist schematisch ein Generatorsatz 1 zum Erzeugen eines Wechselstromes gemäß einer weiteren Ausführungsform gezeigt. Der Generatorsatz 1 weist analog zu den Ausführungsformen der Figuren 1 und 2 eine über ein Getriebe 22 mit einem Wechselstrom-Generator 3 verbundene Primärleistungseinheit 2 in Form eines Verbrennungsmotors auf.

Alternativ zu den Ausführungsformen der Figuren 1 und 2 weist die Sekundärleistungseinheit 4 in Figur 3 einen Sekundärenergiespeicher 41, beispielsweise eine Batterie, wie etwa eine Lithiumlonen-Batterie, oder ein Kondensator, beispielsweise einen Elektrolyt-Kondensator oder einen Superkondensator, und zudem einen Wechselrichter 45, optional in Form eines fremdgeführten Wechselrichters 45, auf.

Eine Ausgangsleitung 44 des Wechselrichters 45 ist zu- und abschaltbar mit der Ausgangsleitung 32 des Wechselstrom-Generators 3 verbunden. Zum Bereitstellen einer zusätzlichen Leistung an der Ausgangsleitung 32 kann die Ausgangsleitung 44 mit der Ausgangsleitung 32 verbunden werden. Über den Wechselrichter 45 wird dadurch eine zusätzliche Leistung aus dem Sekundärenergiespeicher 41 bereitgestellt.

Optional kann der Wechselrichter 45 als bidirektional arbeitender Inverter bzw. Umrichter ausgebildet sein, sodass im Normalbetrieb der Sekundärenergiespeicher 41 über die an der Ausgangsleitung 32 durch den Wechselstrom-Generator 3 bereitgestellte Leistung geladen werden kann. Alternativ kann analog zur Ausbildung in Figur 2 ein separater Gleichrichter (in Figur 3 nicht gezeigt) vorgesehen sein, um den Sekundärenergiespeicher 41 zu laden.

### Bezugszeichenliste

- 1: Generatorsatz
- 2: Primärleistungseinheit
- 20: Ausgangswelle
- 22: Getriebe
- 3: Wechselstrom-Generator
- 30, 30`: Eingangswelle
- 32: Ausgangsleitung
- 4: Sekundärleistungseinheit
- 40: Elektromotor
- 41: Sekundärenergiespeicher
- 42: Ausgangswelle
- 43: Gleichrichter
- 44: Ausgangsleitung
- 45: Wechselrichter

## Patentansprüche

1. Generatorsatz (1) zum Erzeugen eines Wechselstromes, umfassend eine Primärleistungseinheit (2), einen mit der Primärleistungseinheit (2) drehgekoppelten Wechselstrom-Generator (3), welcher eingerichtet ist, um eine durch die Primärleistungseinheit (2) bereitgestellte Primärleistung in eine elektrische Leistung umzuwandeln,
und
eine zuschaltbare Sekundärleistungseinheit (4), welche derart ausgebildet ist, dass die erzeugte Leistung des Wechselstrom-Generators (3) durch Zuschalten der Sekundärleistungseinheit (4) erhöht wird, wobei
die Sekundärleistungseinheit (4) einen Elektromotor (40) und einen mit dem Elektromotor (40) kontaktierten Sekundärenergiespeicher (41) aufweist, wobei der Elektromotor (40) mit einer Eingangswelle (30') des Wechselstrom-Generators (3) drehgekoppelt ist,
wobei die Primärleistungseinheit (2) einen Drehzahlregler aufweist und die Sekundärleistungseinheit (4) einen Drehzahlregler aufweist,
**dadurch gekennzeichnet, dass**
dem Drehzahlregler der Sekundärleistungseinheit (4) eine Solldrehzahl zugeführt wird, die unterhalb der Solldrehzahl der Primärleistungseinheit (2) liegt.

2. Generatorsatz (1) gemäß Anspruch 1, **dadurch gekennzeichnet, dass** die Nennleistung des Wechselstrom-Generators (3) einer via eines dem Wechselstrom-Generator (3) von der Primärleistungseinheit (2) zugeführten Primärnennleistungseintrags erzeugten Leistung entspricht.

3. Generatorsatz (1) gemäß Anspruch 1 oder 2, **dadurch gekennzeichnet, dass** die Primärleistungseinheit (2) ein Verbrennungsmotor ist, und/oder dass der Wechselstrom-Generator (3) eine fremderregte Synchronmaschine ist.

4. Generatorsatz (1) gemäß einem der vorstehenden Ansprüche, **dadurch gekennzeichnet, dass** der Elektromotor (40), eine Asynchronmaschine oder einen Reluktanzmotor ist, und/oder der Sekundärenergiespeicher (41), eine Batterie, insbesondere eine Lithium-Ionen-Batterie, oder ein Kondensator, insbesondere ein Elektrolyt-Kondensator oder ein Superkondensator, ist.

5. Generatorsatz (1) gemäß einem der vorstehenden Ansprüche, **dadurch gekennzeichnet, dass** eine Ausgangswelle (20) der Primärleistungseinheit (2) mit einer Eingangswelle (30) des Wechselstrom-Generators (3) direkt drehverbunden ist, oder dass die Ausgangswelle (20) der Primärleistungseinheit (2) mit der Eingangswelle (30) des Wechselstrom-Generators (3) über ein Getriebe (22) drehverbunden ist.

6. Generatorsatz (1) gemäß einem der vorstehenden Ansprüche, **dadurch gekennzeichnet, dass** eine Ausgangswelle (42) der Sekundärleistungseinheit (4) mit einer Eingangswelle (30`) des Wechselstrom-Generators (3) direkt drehverbunden ist, oder die Ausgangswelle (42) der Sekundärleistungseinheit (4) mit der Eingangswelle (30`) des Wechselstrom-Generators (3) über ein Getriebe drehverbunden ist.

7. Generatorsatz (1) gemäß einem der vorstehenden Ansprüche, **dadurch gekennzeichnet, dass**, der Sollwert der Sekundärleistungseinheit (4) innerhalb eines für die Sekundärleistungseinheit (4) vorgegebenen Toleranzbandes liegt.

8. Generatorsatz (1) gemäß einem der vorstehenden Ansprüche, **dadurch gekennzeichnet, dass** eine Regelstruktur der Primärleistungseinheit (2) und/oder eine Regelstruktur der Sekundärleistungseinheit (4) zweistufig aufgebaut ist, wobei bevorzugt einem äußeren Drehzahlregler ein innerer Drehmomentregler unterlagert ist, wobei bevorzugt der Drehzahlregler die Vorgabewerte für den Drehmomentregler liefert, wobei die Vorgabewerte bevorzugt auf positive Drehmomentwerte beschränkt sind.

9. Generatorsatz (1) gemäß einem der vorstehenden Ansprüche, **dadurch gekennzeichnet, dass** die Primärleistungseinheit (2) einen Drehzahlregler mit zuschaltbarem und abschaltbarem negativen Drehmoment umfasst und/oder die Sekundärleistungseinheit (4) einen Drehzahlregler mit zuschaltbarem und abschaltbarem negativem Drehmoment umfasst, wobei bevorzugt ein Zuschalten oder Abschalten des negativen Drehmoments gemäß dem Energiegehalt des Sekundärenergiespeichers (41) der Sekundärleistungseinheit (4) steuerbar/regelbar ist.

10. Generatorsatz (1) gemäß einem der vorstehenden Ansprüche, **dadurch gekennzeichnet, dass** die Sekundärleistungseinheit (4) ausgebildet ist, um ein Drehmoment bereitzustellen, das größer ist als ein Losbrechmoment der Primärleistungseinheit (1) und die mechanischen Verluste des Generatorsatzes (1).

11. Generatorsatz (1) gemäß Anspruch 1 oder 2, **dadurch gekennzeichnet, dass** die Sekundärleistungseinheit (4) den Sekundärenergiespeicher (41), bevorzugt eine Batterie, insbesondere eine Lithium-Ionen-Batterie, oder ein Kondensator, insbesondere ein Elektrolyt-Kondensator oder ein Superkondensator, und einen Wechselrichter (45), bevorzugt einen fremdgeführten Wechselrichter (45), umfasst.

## Claims

1. Generator set (1) for generating an alternating current, comprising a primary power unit (2), an alternator (3) rotationally coupled to the primary power unit (2), which is configured to convert a primary power provided by the primary power unit (2) into an electric power,
and
a connectable secondary power unit (4) which is configured in such a way that the generated power of the alternator (3) is increased by connecting the secondary power unit (4),
wherein the secondary power unit (4) comprises an electric motor (40) and a secondary energy storage (41) contacted with the electric motor (40), wherein the electric motor (40) is rotationally coupled to an input shaft (30') of the alternator (3),
wherein the primary power unit (2) comprises a speed controller and the secondary power unit (4) comprises a speed controller,
**characterized in that**
the speed controller of the secondary power unit (4) is input with a set rotation speed which is below the set rotation speed of the primary power unit (2).

2. Generator set (1) according to claim 1, **characterized in that** the rated power of the alternator (3) corresponds to a power generated via a primary rated power input supplied to the alternator (3) from the primary power unit (2).

3. Generator set (1) according to claim 1 or 2, **characterized in that** the primary power unit (2) is an internal combustion engine, and/or that the alternator (3) is an externally excited synchronous machine.

4. Generator set (1) according to one of the preceding claims, **characterized in that** the electric motor (40) is an asynchronous machine or a reluctance motor, and/or the secondary energy storage (41) is a battery, in particular a lithium-ion battery, or a capacitor, in particular an electrolytic capacitor or a supercapacitor.

5. Generator set (1) according to any one of the preceding claims, **characterized in that** an output shaft (20) of the primary power unit (2) is directly rotationally connected to an input shaft (30) of the alternator (3), or **in that** the output shaft (20) of the primary power unit (2) is rotationally connected to the input shaft (30) of the alternator (3) via a transmission (22).

6. Generator set (1) according to any one of the preceding claims, **characterized in that** an output shaft (42) of the secondary power unit (4) is directly rotationally connected to an input shaft (30') of the alternator (3), or the output shaft (42) of the secondary power unit (4) is rotationally connected to the input shaft (30') of the alternator (3) via a transmission.

7. Generator set (1) according to one of the preceding claims, **characterized in that**, the set point of the secondary power unit (4) is within a tolerance band predetermined for the secondary power unit (4).

8. Generator set (1) according to one of the preceding claims, **characterized in that** a control structure of the primary power unit (2) and/or a control structure of the secondary power unit (4) is structured in two stages, wherein preferably an inner torque controller is subordinated to an outer speed controller, wherein preferably the speed controller provides the preset values for the torque controller, wherein preferably the preset values are limited to positive torque values.

9. Generator set (1) according to one of the preceding claims, **characterized in that** the primary power unit (2) comprises a speed controller with connectable and disconnectable negative torque and/or the secondary power unit (4) comprises a speed controller with connectable and disconnectable negative torque, wherein preferably a connection or disconnection of the negative torque is controllable/adjustable according to the energy content of the secondary energy storage (41) of the secondary power unit (4).

10. Generator set (1) according to any one of the preceding claims, **characterized in that** the secondary power unit (4) is configured to provide a torque greater than a breakaway torque of the primary power unit (1) and the mechanical losses of the generator set (1).

11. Generator set (1) according to claim 1 or 2, **characterized in that** the secondary power unit (4) comprises the secondary energy storage (41), preferably a battery, in particular a lithium-ion battery, or a capacitor, in particular an electrolytic capacitor or a supercapacitor, and an inverter (45), preferably an externally guided inverter (45).

## Revendications

1. Groupe electrogène (1) pour générer un courant alternatif, comprenant une unité de puissance primaire (2), un générateur de courant alternatif (3) couplé en rotation à l'unité de puissance primaire (2), qui est conçu pour convertir une puissance primaire fournie par l'unité de puissance primaire (2) en une puissance électrique,
et
une unité de puissance secondaire (4) pouvant être mise en circuit, qui est conçue de telle sorte que la puissance générée du générateur de courant alternatif (3) est augmentée par la mise en circuit de l'unité de puissance secondaire (4), dans laquelle
l'unité de puissance secondaire (4) comprend un moteur électrique (40) et un stockage d'énergie secondaire (41) en contact avec le moteur électrique (40), le moteur électrique (40) étant couplé en rotation à un arbre d'entrée (30') du générateur de courant alternatif (3),
dans lequel l'unité de puissance primaire (2) comprend un régulateur de vitesse et l'unité de puissance secondaire (4) comprend un régulateur de vitesse,
**caractérisé en ce que**
une vitesse de rotation de consigne qui est amenée au régulateur de vitesse de rotation de l'unité de puissance secondaire (4), est inférieure à la vitesse de rotation de consigne de l'unité de puissance primaire (2).

2. Groupe électrogène (1) selon la revendication 1, **caractérisé en ce que** la puissance nominale du générateur de courant alternatif (3) correspond à une puissance générée via une entrée de puissance nominale primaire fournie au générateur de courant alternatif (3) par l'unité de puissance primaire (2).

3. Groupe électrogène (1) selon la revendication 1 ou 2, **caractérisé en ce que** l'unité de puissance primaire (2) est un moteur à combustion interne, et/ou **en ce que** le générateur de courant alternatif (3) est une machine synchrone à excitation séparée.

4. Groupe électrogène (1) selon l'une des revendications précédentes, **caractérisé en ce que** le moteur électrique (40) est une machine asynchrone ou un moteur à réluctance, et/ou le stockage d'énergie secondaire (41) est une batterie, en particulier une batterie au lithium-ion, ou un condensateur, en particulier un condensateur électrolytique ou un supercondensateur.

5. Groupe électrogène (1) selon l'une des revendications précédentes, **caractérisé en ce qu'**un arbre de sortie (20) de l'unité de puissance primaire (2) est directement relié en rotation à un arbre d'entrée (30) du générateur de courant alternatif (3), ou **en ce que** l'arbre de sortie (20) de l'unité de puissance primaire (2) est relié en rotation à l'arbre d'entrée (30) du générateur de courant alternatif (3) via un engrenage (22).

6. Groupe électrogène (1) selon l'une des revendications précédentes, **caractérisé en ce qu'**un arbre de sortie (42) de l'unité de puissance secondaire (4) est directement relié en rotation à un arbre d'entrée (30') du générateur de courant alternatif (3), ou l'arbre de sortie (42) de l'unité de puissance secondaire (4) est relié en rotation à l'arbre d'entrée (30') du générateur de courant alternatif (3) via un engrenage.

7. Groupe électrogène (1) selon l'une des revendications précédentes, **caractérisé en ce que** la valeur de consigne de l'unité de puissance secondaire (4) se situe dans une bande de tolérance prédéfinie pour l'unité de puissance secondaire (4).

8. Groupe électrogène (1) selon l'une des revendications précédentes, **caractérisé en ce qu'**une structure de régulation de l'unité de puissance primaire (2) et/ou une structure de régulation de l'unité de puissance secondaire (4) est conçue à deux niveaux, un régulateur de couple interne étant de préférence subordonné à un régulateur de vitesse de rotation externe, le régulateur de vitesse de rotation fournissant de préférence les valeurs de consigne pour le régulateur de couple, les valeurs de consigne étant de préférence limitées à des valeurs de couple positives.

9. Groupe électrogène (1) selon l'une des revendications précédentes, **caractérisé en ce que** l'unité de puissance primaire (2) comprend un régulateur de vitesse avec un couple négatif pouvant être connecté et déconnecté et/ou l'unité de puissance secondaire (4) comprend un régulateur de vitesse avec un couple négatif pouvant être connecté et déconnecté, de préférence une connexion ou une déconnexion du couple négatif pouvant être commandée/régulée selon le contenu énergétique du stockage d'énergie secondaire (41) de l'unité de puissance secondaire (4).

10. Groupe électrogène (1) selon l'une des revendications précédentes, **caractérisé en ce que** l'unité de puissance secondaire (4) est adaptée pour fournir un couple supérieur à un couple de décollement de l'unité de puissance primaire (1) et aux pertes mécaniques du groupe électrogène (1).

11. Groupe électrogène (1) selon la revendication 1 ou 2, **caractérisé en ce que** l'unité de puissance secondaire (4) comprend le stockage d'énergie secondaire (41), de préférence une batterie, en particulier une batterie au lithium-ion, ou un condensateur, en particulier un condensateur électrolytique ou un supercondensateur, et un onduleur (45), de préférence un onduleur (45) à commande externe.
